Europäisches Patentamt

European Patent Office

Office européen des brevets

(19)

(11) Publication number: **0 128 413**
**B1**

## (12) EUROPEAN PATENT SPECIFICATION

(45) Date of publication of patent specification: **13.12.89**

(51) Int. Cl.⁴: **C 01 B 33/28**

(21) Application number: **84105837.3**

(22) Date of filing: **22.05.84**

(54) **Self-bonded zeolite pellet.**

(30) Priority: **09.06.83 US 502840**

(43) Date of publication of application:
**19.12.84 Bulletin 84/51**

(45) Publication of the grant of the patent:
**13.12.89 Bulletin 89/50**

(84) Designated Contracting States:
**BE DE FR GB IT NL**

(56) References cited:
**US-A-3 445 184**

(73) Proprietor: **PQ Corporation
500 East Swedesford Road
Valley Forge, PA 19482 (US)**

(72) Inventor: **Crabtree, Robert Glen
153 West Burns Street
Akron Ohio (US)**
Inventor: **Gerdes, William Herman
7799 Ranett Avenue
Hudson Ohio (US)**

(74) Representative: **Kraus, Walter, Dr. et al
Patentanwälte Kraus, Weisert & Partner
Thomas-Wimmer-Ring 15
D-8000 München 22 (DE)**

## Description

This invention relates to a self-bonded molecular sieve product with controlled porosity and a process of manufacturing the same.

Self-bonded mordenite bodies can be made as described in U.S. Patent 3,445,184 of Whittmore. The resulting products are pure (i.e. binderless), strong and porous.

This invention results in an improved product with increased pore volume and pore size. It is found that the type of drying has a significant effect on the porosities of self-bonded zeolitic products. Conventional methods of drying such as convective drying either on a belt as a fluidized bed or a combination of air drying at room temperature and convective drying results in products of low porosities. However, when infrared drying is employed the porosities are maximized.

Porosity, in the context of this disclosure, refers to macropores between the crystals or aggregates of crystals (inter-crystalline) and not to the pores within the zeolitic crystal structures (intra-crystalline). Median pore diameter of these macropores range from about 0.5 microns to greater than 2.0 microns whereas pores within a zeolitic structure are smaller than 10 Angstroms (0.001 microns).

The increase in the size and volume of these macropores increases the rates of diffusion of adsorbates and desorbates in the case of adsorption processes, and increases the rates of diffusion of reactants and products in the case of catalytic reactions or cations in the ion exchange process in which zeolitic products are used.

According to Whittmore's patent, extrudates of suitable composition containing $Al_2O_3$ and $SiO_2$ are formed, dried using a conventional technique and heat treated to set the bond resulting in a product strong enough to survive autoclaving under high pressures and temperatures.

According to the present invention the drying step in the forming process described above is carried out using driers employing infrared heat.

The increase in macroporosity is first evident in the fired ware. The number of pores greater than 0.1 microns is increased so that the median pores diameter is 0.4 microns or greater. Total pore volumes are increased to 0.24 to 0.32 cc/gm. Contrastingly, in Whittmore's fired ware, median pore diameters are typically 0.15 to 0.3 microns with pore volumes of 0.18 to 0.3 cc/gm.

In this invention, macropores of the final product are also increased. The number of pores greater than 1.5 microns is increased so that the median pore diameter is 2.0 microns or greater. Pore volumes are increased to 0.3 to 0.4 cc/gm. Whittmore's final products have median pore diameters of 0.8 to 1.9 microns with total pore volume of 0.18 to 0.3 cc/gm.

While this invention is particularly directed to self-bonded mordenite pellets it is applicable to the production of large pore, high pore volume self-bonded synthetic alumino-silicate zeolites of other varieties, such as synthetic faujasites, or zeolites X and Y.

Invention—Example I

Four hundred pounds of mineral mixtures were mixed to form an extrudeable composition as taught in U.S. Patent 3,445,184 and formed into 1.58 mm (1/16″) diameter pellets. The pellets in a bed no more than about 3 pellets deep, were conveyed under infrared heaters where air temperature in the pellet bed was maintained at 204—260°C (400—500°F). Loss on ignition (LOI) of the dried product was 18—20% for an 85 second exposure of the pellet bed. It was then calcined at 500°C, in order to set the ceramic bond.

The pore volume was 0.315 cc/gm with a median pore diameter of 0.88 microns.

This batch of fired ware was autoclaved to form zeolitic structure with a solution of sodium silicate at 193 to 199°C (380—390°F), for 1.5 hours. After cooling, the batch was washed for ten hours to remove sodium silicate solution and dried at 163°C (325°F). The final zeolitic product had a pore volume of 0.404 cc/gm with a median pore diameter of 3.0 microns.

Comparative Example A

In the preparation of the second batch drying was carried out following Whittmore's patent on a convective belt dryer which was maintained at room temperature. Fired ware had a pore volume of 0.244 cc/gm with a median pore of only 0.25 microns. The final zeolitic product had a pore volume of 0.279 cc/gm with a median pore diameter of only 1.3 microns.

Comparative Example B

In the preparation of the third batch drying step in the process outlined in Example 1 was carried out using a room temperature fluid bed drier. Fired ware had a pore volume of 0.335 cc/gm with a pore diameter of 1.1 microns. The final zeolitic product had a pore volume of 0.272 cc/gm with a median pore diameter of 2.1 microns.

Comparative Example C

In the preparation of the fourth batch the drying step in the process outlined in Example 1 was carried out by a combination of static air drying and forced air drying on a belt, both at room temeprature. Thus, a batch was room air dried on trays for 24 hours then forced air dried on a belt to an LOI of 18—20%. LOI (loss on ignition) in this case means the loss in weight when the pellets are heated to 120°C. (air temperature) for twenty minutes.

Fired ware had a pore volume of 0.214 cc/gm with a median pore diameter of 0.78 microns. The final zeolitic product had a pore volume of 0.296 cc/gm and a median pore diameter of 1.8 microns.

Comparative Example D

In the preparation of the fifth batch, the drying step in the process outlined in Example 1 was carried out on a convection belt drier using heated air. The fired ware had a pore volume of 0.269 cc/gm and a mean pore diameter of 0.24 microns. The final zeolitic product had a pore volume of 0.266 cc/gm and a mean pore diameter of 1.45 microns.

A suitable mix for the preparation of mordenite is a mixture of 19.15% Georgia kaolin, 26.57% diatomaceous earth, 54.28% (28.7% $SiO_2$, 8.9% $Na_2O$) aqueous sodium silicate, with added water to give a mix of extrudeable consistency, having a mole composition ratio of soda ($Na_2O$) to alumina to silica of 1 to 1 to 10.

The mix, after being formed into pellets and dried by infrared radiation, is fired to around 500°C, to form hard strong but not completely vitrified bodies suitable for autoclaving. With the above described mix a suitable composition for the sodium silicate in the autoclave under autogeneous pressure at 380 to 390°C. is the mole ratio, soda ($Na_2O$) to silica to water of 0.3 to 1 to 8.7, giving a solution of 10 mole% silica.

## Claims

1. A self-bonded zeolite having a median macropore diameter of 2 micrometers or greater and a total macropore volume of greater than 0.3 cubic centimeters per gram, said macropores being inter-crystalline pores formed between crystals or aggregates of crystals and not intra-crystalline pores within the zeolite crystal.

2. A pellet according to claim 1, consisting essentially of crystalline synthetic mordenite.

3. A pellet according to claim 1, consisting essentially of crystalline synthetic faujasite.

4. A method of making self-bonded crystalline zeolite agglomerate having a porosity as defined in claim 1 comprising forming an extrudable mixture which when autoclaved in sodium silicate solution will produce zeolite crystals, forming said mix into shaped bodies, drying, firing said bodies to produce strongly bonded stable pellets, but below complete vitrification of the mix, and autoclaving said pellets under autogenous pressure whereby the desired zeolite crystals are formed, characterized by the fact that the drying of said shaped bodies is carried out in air by infrared heating.

## Patentansprüche

1. Selbstgebundener Zeolith mit einem Makroporandurchmesser mit einem Medianwert von 2 µm oder mehr und einem Gesamtmakroporenvolumen von mehr als 0,3 cm³/g, wobei die Makroporen interkristalline Poren zwischen Kristallen oder Kristallaggregaten sind und keine intrakristalline Poren in dem Zeolithkristall.

2. Pellet nach Anspruch 1, das im wesentlichen aus kristallinem synthetischem Mordenit besteht.

3. Pellet nach Anspruch 1, dadurch gekennzeichnet, daß es im wesentlichen aus kristallinem synthetischem Faujasit besteht.

4. Verfahren zum Herstellen von selbstgebundenem kristallinem Zeolithagglomerat, in dem ein extrudierbares Gemisch gebildet wird, das beim Autoklavieren in einer Natriumsilikatlösung Zeolithkristalle bildet, das Gemisch zu formkörpern verformt wird, diese getrocknet und zu stark gebundenen, stabilen Pellets gebrannt werden, ohne daß dabei das Gemisch vollständig verglast wird, und die Pellets unter autogenem Druck autoklaviert werden, so daß die gewünschten Zeolithkristalle gebildet werden, dadurch gekennzeichnet, daß das Trocknen der Formkörper an der Luft durch Infraroterhitzung durchgeführt wird.

## Revendications

1. Zéolite autoliée comportant des macropores, dont le diamètre moyen est égal à 2 microns ou plus et dont le volume total est supérieur à 0,3 centimètre cube par gramme, lesdits macropores étant des pores intercristallins situés entre des cristaux ou des agrégats de cristaux et non des pores intracristallins situés dans le cristal de zéolite.

2. Pastille selon la revendication 1, constituée essentiellement par de la mordénite cristalline synthétique.

3. Pastille selon la revendication 1, constituée essentiellement par de la faujasite cristalline synthétique.

4. Procédé pour fabriquer un aggloméré de zéolite cristalline autoliée présentant une porosité telle que définie dans la revendication 1, consistant à former un mélange pouvant être extrudé, qui, lorsqu'il est passé à l'autoclave dans une solution de silicate de sodium, produit des cristaux de zéolite, donner audit mélange la forme de corps moulés, réaliser une dessication, cuire lesdits corps de manière à produire des pastilles stables fortement liées, juste avant une vitrification complète du mélange, et passer à l'autoclave lesdites pastilles en les soumettant à une pression autogène, ce qui permet de former les cristaux de zéolite désirés, caractérisé en ce que la dessication desdits corps moulés est exécutée à l'air au moyen d'un chauffage à infrarouge.